# EUROPEAN PATENT SPECIFICATION

(11) **EP 3 378 708 B1**
(45) Date of publication and mention of the grant of the patent: **13.11.2019**
(21) Application number: 18162966.8
(22) Date of filing: 20.03.2018
(51) Int. Cl.: B60R 21/02, B60R 21/12

(54) **DRIVER'S CAB FOR A PUBLIC PASSENGER TRANSPORT VEHICLE**
FAHRERHAUS FÜR EIN ÖFFENTLICHES PASSAGIERTRANSPORTFAHRZEUG
CABINE DE CONDUCTEUR POUR UN VÉHICULE DE TRANSPORT PUBLIC DE PASSAGERS

(30) Priority: 20.03.2017 IT 201700030517
(43) Date of publication of application: 26.09.2018
(73) Proprietor: IVECO FRANCE S.A.S., 69200 Vénissieux (FR)
(72) Inventor: BONNAUD, Bernard, F-79440 COURLAY (FR)
(74) Representative: Bongiovanni, Simone

(56) References cited:
- EP-A1- 2 428 411
- WO-A1-2012/062246
- AU-A- 3 399 893
- SU-A1- 757 373
- US-A1- 2014 210 225

## Description

The present invention relates to a driver's cab for a public passenger transport vehicle, in particular for a bus.

A driver's cab for a public passenger transport vehicle of known type usually comprises a seat on which the driver can sit. This seat is normally positioned between the vehicle's dashboard and, to the rear with respect to the seat, a wall fixed to the floor of the bus and configured to house an electrical panel.

The above-mentioned driver's cab also comprises a leaf hinged on a lateral edge of the rear wall and configured to allow the driver to access the driver's cab. The leaf also comprises an emergency glass which is housed inside the leaf which can emerge to completely separate the driver in the driver's cab with respect to the rest of the vehicle's interior space. The leaf may also comprise a cash drawer which opens laterally towards the driver.

The above-described system is however narrow and claustrophobic for the driver. In fact, between the seat and the rear wall there is normally only 4 cm of free space and the passageway for the driver is only approximately 34 cm wide. This 34 cm-wide passageway is not only unergonomic but it can also prevent a quick exit of the driver if necessitated, for example during an accident.

In addition, the wall and the leaf are normally made from opaque plastic, increasing the feeling of claustrophobia for the driver.

Finally, the cash drawer has an opening which is unergonomic.

Examples of known driver's cab are disclosed in documents SU757373 A1 or EP 2428411 A1.

It is therefore still necessary to enhance the ergonomics, the free space and the safety of driver's cabs for public passenger transport vehicles, without however increasing their footprint inside the vehicle, or their cost.

The objects of this invention are to resolve the above-mentioned problems.

The above-mentioned objects are achieved by a driver's cab for a public passenger transport vehicle according to claim 1.

Other characteristics and advantages of the invention will become apparent from the following non-limiting description, provided for illustrative purposes, with reference to the attached drawings in which:
- Figure 1 is a plan view of a front part of a vehicle comprising a driver's cab according to the present invention in a first operating step;
- Figure 2 is a plan view of a front part of a vehicle comprising the driver's cab of Figure 1 in a second operating step;
- Figures 3-6 are perspective views representing different operating steps of the driver's cab of Figure 1.

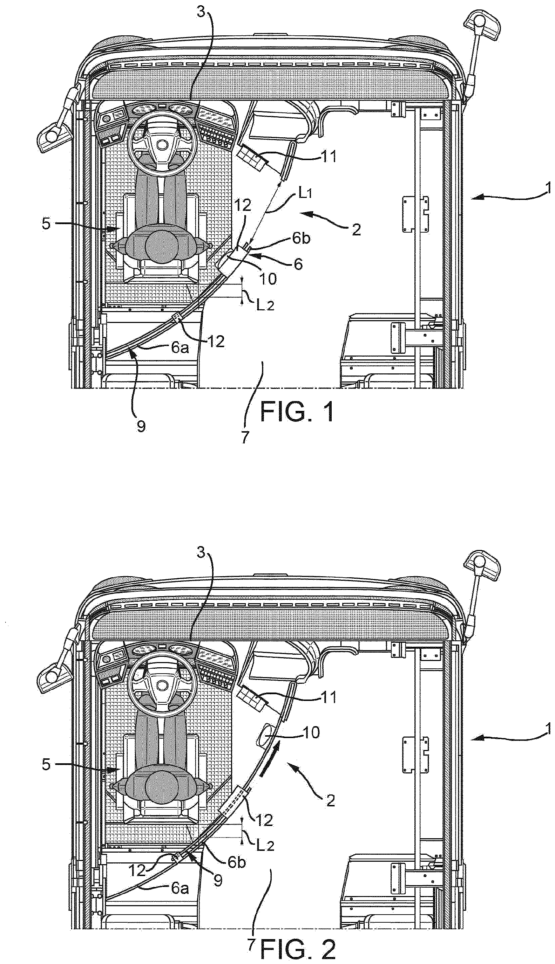

Figure 1 shows a front part of a vehicle 1, for example a bus, essentially comprising a driver's cab 2 according to the present invention and a dashboard 3 comprising the driving systems of said vehicle 1.

The driver's cab 2 essentially comprises a seat 5, positioned in front of the dashboard 3, configured to allow a driver to sit and be able to drive the vehicle 1.

The driver's cab 2 also comprises a rear wall 6, fixed with respect to the floor 7 of the vehicle 1 and preferably extending up to the ceiling of the vehicle 1.

The wall 6 is configured to partly surround the seat 5. The wall 6 preferably comprises a rear part 6a which surrounds the seat 5 to its rear and a side part 6b which surrounds the seat 5 to its side so as to leave an access space L1 to the side of the driver's cab 2 between the wall 6 and the dashboard 3. There is a rear free space L2 between the rear part 6a and the seat 5.

The access space L1 is preferably at least 450 mm, or even 500 mm, and the rear free space L2 is preferably at least 100 mm, or even 115 mm, at the closest point to the seat 5.

The wall 6 is curved and preferably made from transparent material, for example glass or plastic.

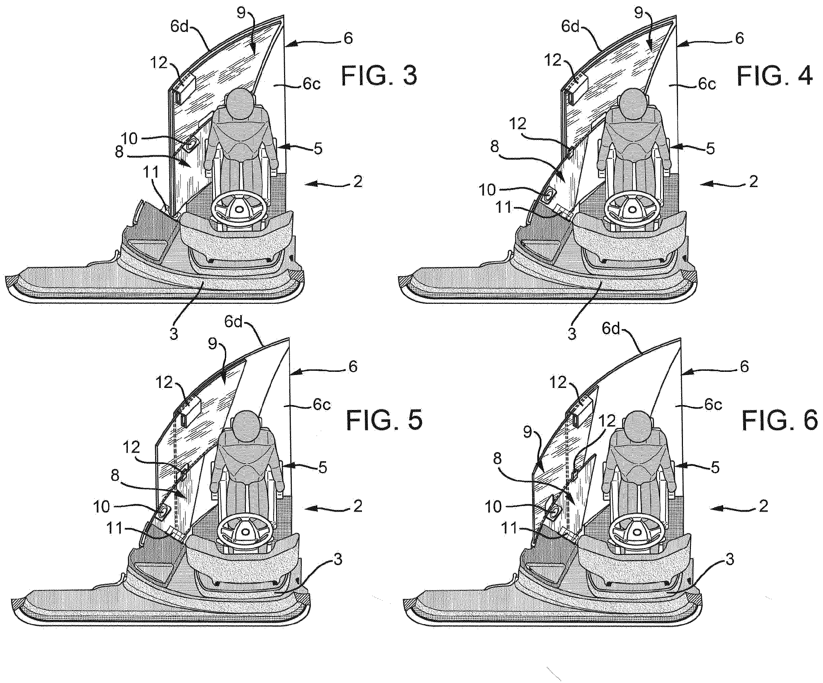

Even more preferably, the wall 6 is substantially cylindrical, more specifically it comprises a portion 6c of the rear part 6a (see Figures 3-6) which is a plane inclined with respect to the floor 7 of the vehicle 1 and a rear portion 6d, comprising the remaining space of the rear part 6a and all the side part 6b, which is cylindrical.

The driver's cab 2 also comprises a lower leaf 8 configured to slide along the wall 6 between a first position in which it is completely superimposed over the wall 6, thus leaving the space L1 free for the driver's access, and a second position in which it occupies the remaining side space around the seat 5 in order to close off the free space L1, preventing access to the driver's cab 2.

The lower leaf 8 is preferably of the same curved shape as the wall 6, thus preferably cylindrical, and it is also made of transparent material.

Sliding of the lower leaf 8 over the wall 6 is preferably carried out in a known manner, thanks to the guideways 12 or guides provided on the wall 6 and on the floor 7 of the vehicle. Operation of the lower leaf 8 is executed by operating means, preferably by an electric motor (not shown).

The travel path of the lower leaf 8 stops at the dashboard 3, where the lower leaf 8 can be locked in a known way.

The lower leaf 8 may also beneficially comprise a cash tray 10 which is fixed with respect to the lower leaf 8 and extends towards the seat 5.

The driver's cab 2 also comprises an upper leaf 9 configured to slide along the wall 6 and on top of the lower leaf 8 between a first position in which it is completely superimposed over the wall 6 and a second position in which it occupies all the remaining side space above the lower leaf 8 in order to completely separate the driver's cab 2 from the remaining interior space of the vehicle 1.

The upper leaf 9 is preferably an emergency glass for the driver's cab 2.

The upper leaf 9 is preferably of the same shape as the lower leaf 8, and thus of the same shape as the wall 6.

Sliding of the upper leaf 9 along the wall 6 is preferably carried out in a known manner, thanks to the guideways 12 or guides provided on the wall 6 itself and on the lower leaf 8. Operation of the upper leaf 9 is executed by the said operating means, preferably by an electric motor (not shown).

The travel path of the upper leaf 9 stops at the dashboard 3, where the upper leaf 9 can be locked in a known way.

Finally, the driver's cab 2 may comprise a cash drawer 11 housed in the dashboard 3 and configured to extend towards the seat 5.

The operation of the driver's cab 2 of a vehicle 1 for the public transport of passengers is the following.

In a first operating step, the driver's cab 2 allows the driver access through the free space L1 because both the lower leaf 8 and the upper leaf 9 are superimposed over the wall 6 leaving the free space L1 free. (Figure 3)

In a second operating step, the lower leaf 8 moves until it locks onto the dashboard 3 (Figure 4). It thus closes the free space L1 around the seat 5, preventing access to the driver's cab 2.

In a third operating step, the upper leaf 8 moves (Figure 5) until it locks onto the dashboard 3 (Figure 6). It thus occupies the side space around the seat 5 above the lower leaf 8 and it separates the driver's cab 2 from the remaining interior space of the vehicle.

In the interests of succinctness, opening of the driver's cab 2 is not described, being simply the inverse of the steps described above.

From the foregoing, the benefits of a driver's cab for a public passenger transport vehicle according to the present invention are apparent.

The driver's cab 2 thus ensures that there is more space for the driver inside the driver's cab 2 with respect to known driver's cabs, without increasing the footprint of the driver's cab 2 with respect to the remaining interior space of the vehicle 1. It also ensures a wider, and therefore more ergonomic and safe, access for the driver.

The use of a transparent wall 6 and transparent leaves 8, 9 allows the driver a view of the interior of the vehicle 1 and ensures that the driver does not feel claustrophobic.

The use of a sliding leaf 9 as an emergency glass makes it possible to save space and simplify the operating structure of the emergency glass compared to known emergency glasses.

The cash drawer 11 being fixed with respect to the lower leaf 8 makes possible its use with better ergonomics compared to known cash drawers.

Finally, it is apparent that the driver's cab for a public passenger transport vehicle according to the present invention may be subject to modifications and variations without thereby departing from the protective scope of the claims.

For example, the shape of the wall 6 and/or the leaves 8, 9 could be different and/or the operating means could comprise pneumatic systems.

## Claims

1. A vehicle (1) for the public transport of passengers essentially comprising a dashboard (3) and a driver's cab (2) in front of said dashboard (3), said driver's cab (2) comprising a seat (5) for a driver of said vehicle comprising:
- a wall (6) fixed with respect to the floor (7) of said vehicle (1) and configured to surround the rear of said seat (5) and at least one side part of the space around said seat (5) leaving an access space (L1) to said driver's cab (2) between said side part and said dashboard (3); and
- a first leaf (8) configured to slide along said wall (6) between a first position wherein it is completely superimposed over said wall (6) and a second position wherein it surrounds the side space around the seat (5) between said wall (6) and said dashboard (3) to close said access space (L1)
**characterized in that** said wall (6) and said first leaf (8) are curved and **in that** said driver's cab (2) comprises a second leaf (9) configured to slide along said wall (6) and on said first leaf (8), said second leaf (9) being configured to completely surround the side space around the seat (5) on top of said first leaf (8) to separate the space.

2. The vehicle according to claim 1, wherein said wall (6) and said first leaf (8) are made of a transparent material.

3. The vehicle according to one of the previous claims, wherein said sliding of said first leaf (8) over said wall (6) is achieved by means of guideways (12) supported by said wall (6) and/or said floor (7).

4. The vehicle according to one of the previous claims, wherein said sliding is operated by operating means.

5. The vehicle according to one of the previous claims, wherein the closing of said first leaf (8) is controlled from said dashboard (3).

6. The vehicle according to claim 4, wherein said second leaf (9) is an emergency glass for said driver's cab (2).

7. The vehicle according to one of the preceding claims, wherein said sliding of said second leaf (9) over said wall (6) is achieved by means of guideways (12) supported by said wall (6) and/or said first leaf (8).

8. The vehicle according to one of the preceding claims, wherein the closing of said second leaf (9) is controlled from a dashboard (3) of said vehicle (1).

9. The vehicle according to one of the previous claims, wherein when said first leaf (8) is in first said position, the side access (L1) to the driver's cab (2) is at least 500 mm wide.

10. The vehicle according to one of the previous claims, wherein the minimum space (L2) between said wall (6) and said seat (5) is at least 100 mm.

11. The vehicle according to one of the previous claims, wherein said first leaf (8) comprises a cash tray (10) fixed to said first leaf (8) and extending towards said seat (5).

12. The vehicle according to one of the previous claims, wherein said driver's cab (2) comprises a cash drawer (11) placed inside said dashboard (3) and configured to extend towards the seat (5).

## Patentansprüche

1. Ein Fahrzeug (1) für den öffentlichen Transport von Passagieren, im Wesentlichen umfassend ein Armaturenbrett (3) und eine Fahrerkabine (2) vor dem Armaturenbrett (3), wobei die Fahrerkabine (2) einen Sitz (5) für einen Fahrer des Fahrzeugs umfasst, umfassend:
- eine Wand (6), befestigt in Bezug auf den Boden (7) des Fahrzeugs (1) und ausgebildet, um die Rückseite des Sitzes (5) und mindestens einen Seitenbereich des Raums um den Sitz herum zu umschließen, wobei ein Durchlass (L1) zur Fahrerkabine (2) zwischen dem Seitenbereich und dem Armaturenbrett (3) frei bleibt; und
- ein erstes Türblatt (8), ausgebildet um entlang der Wand (6) in eine erste Position zu gleiten, in der es vollständig über der Wand (6) liegt, und eine zweite Position, in der es den Seitenbereich um den Sitz (5) zwischen der Wand (6) und dem Armaturenbrett (3) umgibt, um den Durchlass (L1) zu verschließen
**dadurch gekennzeichnet, dass** die Wand (6) und das erste Türblatt (8) gekrümmt sind und dass die Fahrerkabine (2) ein zweites Türblatt (9) umfasst, ausgebildet um entlang der Wand (6) und auf das erste Türblatt (8) zu gleiten, wobei das zweite Türblatt (9) ausbildet ist, um den Seitenbereich um den Sitz (5) oberhalb des ersten Türblatts (8) komplett zu umschließen, derart, dass der Bereich abgetrennt ist.

2. Ein Fahrzeug nach Anspruch 1, wobei die Wand (6) und das erste Türblatt (8) aus transparentem Material bestehen.

3. Ein Fahrzeug nach einem der vorstehenden Ansprüche, wobei das Gleiten des ersten Türblatts (8) über die Wand (6) durch Führungsmittel (12) erreicht wird, welche von der Wand (6) und/oder dem Boden (7) getragen werden.

4. Ein Fahrzeug nach einem der vorstehenden Ansprüche, wobei das Gleiten durch Betriebsmittel betrieben wird.

5. Ein Fahrzeug nach einem der vorstehenden Ansprüche, wobei das Schließen des ersten Türblatts (8) vom Armaturenbrett (3) aus gesteuert wird.

6. Ein Fahrzeug nach Anspruch 4, wobei das zweite Türblatt (9) ein Sicherheitsglas für die Fahrerkabine (2) ist.

7. Ein Fahrzeug nach einem der vorstehenden Ansprüche, wobei das Gleiten des zweiten Türblatts (9) über die Wand (6) durch Führungsmittel (12) erreicht wird, welche von der Wand (6) und/oder dem ersten Türblatt (8) getragen werden.

8. Ein Fahrzeug nach einem der vorstehenden Ansprüche, wobei das Schließen des zweiten Türblatts (9) von einem Armaturenbrett (3) des Fahrzeugs (1) aus gesteuert wird.

9. Ein Fahrzeug nach einem der vorstehenden Ansprüche, wobei, wenn das erste Türblatt (8) in der ersten Position ist, der Seitenzugang (L1) zur Fahrerkabine (2) mindestens 500 mm breit ist.

10. Fahrzeug nach einem der vorstehenden Ansprüche, wobei der Mindestabstand (L2) zwischen der Wand (6) und dem Sitz (5) mindestens 100 mm ist.

11. Ein Fahrzeug nach einem der vorstehenden Ansprüche, wobei das erste Türblatt (8) eine Geldablage (10) umfasst, welche am ersten Türblatt (8) befestigt ist und sich in Richtung des Sitzes (5) erstreckt.

12. Ein Fahrzeug nach einem der vorstehenden Ansprüche, wobei der Führerstand (2) eine Geldschublade (11) umfasst, welche im Armaturenbrett (3) platziert und ausbildet ist, sich in Richtung des Sitzes (5) zu erstrecken.

## Revendications

1. Véhicule (1) pour le transport public de passagers comprenant essentiellement un tableau de bord (3) et une cabine de conducteur (2) devant ledit tableau de bord (3), ladite cabine de conducteur (2) comprenant un siège (5) pour un conducteur dudit véhicule comprenant :
- une paroi (6) fixe par rapport au plancher (7) dudit véhicule (1) et configurée pour entourer l'arrière dudit siège (5) et au moins une partie de côté de l'espace autour dudit siège (5) laissant un espace d'accès (L1) à ladite cabine de conducteur (2) entre ladite partie de côté et ledit tableau de bord (3) ; et
- un premier battant (8) configuré pour coulisser le long de ladite paroi (6) entre une première position dans laquelle il est complètement superposé sur ladite paroi (6) et une seconde position dans laquelle il entoure l'espace de côté autour du siège (5) entre ladite paroi (6) et ledit tableau de bord (3) pour fermer ledit espace d'accès (L1)
**caractérisé en ce que** ladite paroi (6) et ledit premier battant (8) sont incurvés et **en ce que** ladite cabine de conducteur (2) comprend un second battant (9) configuré pour coulisser le long de ladite paroi (6) et sur ledit premier battant (8), ledit second battant (9) étant configuré pour entourer complètement l'espace de côté autour du siège (5) par-dessus ledit premier battant (8) pour séparer l'espace.

2. Véhicule selon la revendication 1, dans lequel ladite paroi (6) et ledit premier battant (8) sont réalisés en un matériau transparent.

3. Véhicule selon l'une des revendications précédentes, dans lequel ledit coulissement dudit premier battant (8) sur ladite paroi (6) se fait au moyen de rails de guidage (12) supportés par ladite paroi (6) et/ou ledit plancher (7).

4. Véhicule selon l'une des revendications précédentes, dans lequel ledit coulissement est actionné par des moyens d'actionnement.

5. Véhicule selon l'une des revendications précédentes, dans lequel la fermeture dudit premier battant (8) est commandée depuis ledit tableau de bord (3).

6. Véhicule selon la revendication 4, dans lequel ledit second battant (9) est un verre d'urgence pour ladite cabine de conducteur (2).

7. Véhicule selon l'une des revendications précédentes, dans lequel ledit coulissement dudit second battant (9) sur ladite paroi (6) se fait au moyen de rails de guidage (12) supportés par ladite paroi (6) et/ou ledit premier battant (8).

8. Véhicule selon l'une des revendications précédentes, dans lequel la fermeture dudit second battant (9) est commandée depuis un tableau de bord (3) dudit véhicule (1).

9. Véhicule selon l'une des revendications précédentes, dans lequel, lorsque ledit premier battant (8) est dans ladite première position, l'accès de côté (L1) à la cabine de conducteur (2) a une largeur d'au moins 500 mm.

10. Véhicule selon l'une des revendications précédentes, dans lequel l'espace minimal (L2) entre ladite paroi (6) et ledit siège (5) est d'au moins 100 mm.

11. Véhicule selon l'une des revendications précédentes, dans lequel ledit premier battant (8) comprend un plateau monnaie (10) fixé audit premier battant (8) et s'étendant vers ledit siège (5).

12. Véhicule selon l'une des revendications précédentes, dans lequel ladite cabine de conducteur (2) comprend un tiroir-caisse (11) placé à l'intérieur dudit tableau de bord (3) et configuré pour s'étendre vers le siège (5).
